# EUROPEAN PATENT APPLICATION

(11) **EP 2 506 531 A1**
(43) Date of publication of application: **03.10.2012**
(21) Application number: 10791268.5
(22) Date of filing: 23.04.2010
(51) Int. Cl.: H04L 29/08

(54) **METHOD FOR FINDING, UPDATING AND SYNCHRONIZING MODIFIED RECORD ITEM AND DATA SYNCHRONIZING DEVICE**

(30) Priority: 31.12.2009 CN 200910262788
(71) Applicant: ZTE Corporation, Shenzhen, Guangdong 518057 (CN)
(72) Inventor: FU, Liqin, Shenzhen City Guangdong Province, 518057 (CN); PU, Jingchun, Shenzhen City Guangdong Province, 518057 (CN); JU, Fei, Shenzhen City Guangdong Province, 518057 (CN); XIE, Xin, Shenzhen City Guangdong Province, 518057 (CN); WEI, Shangkai, Shenzhen City Guangdong Province, 518057 (CN); HE, Jianqiao, Shenzhen City Guangdong Province, 518057 (CN)
(74) Representative: Novagraaf Technologies
(86) International application number: PCT/CN2010/072158
(87) International publication number: WO 2010/148762

(57) **Abstract**

The present invention provides a method for searching a change log item, which includes: in a change log of a data synchronizing device, ordering change log items according to numerical values of entity identifiers contained in the items; in the data synchronizing device, when data updating occurs in an entity in a database of the data synchronizing device, using a search algorithm of elements in an ordered sequence to search out whether a change log item containing an entity identifier of the entity exists in the change log. The present invention also provides a data synchronizing device.

## Description

### Technical Field

The present invention relates to a Personal Information Manager (PIM) service, namely data synchronization service, of terminals in the field of communication, and particularly, to a method for searching, updating and synchronizing a change log item and a data synchronizing device.

### Background of the Related Art

Managements on personal information of terminals such as cellphones and Personal Digital Assistants (PDA), schedule information and mail information and so on have become an important component of terminal information management. How to backup data into a network server safely and effectively and restore the backup data to a terminal conveniently when the terminal is replaced or data of the terminal are changed has become a theme of data synchronization. A SyncML protocol can implement the data synchronization between the terminal and network server, which makes data on the terminal and on the network server stay consistent ultimately.

In order to implement fast and efficient synchronization between the terminal and server, a mode of increment synchronization is normally used. The increment synchronization refers to synchronizing the data updating between the last synchronization and the current synchronization. The fast synchronization in the SyncML protocol is precisely a mode of increment synchronization.

In order to implement the increment synchronization, the terminal or server need to record the data updating of an entity (e.g. a phonebook record) between the last synchronization and the current synchronization in a database (e.g. a phonebook), namely a change log. The change log exists as a file generally and consists of individual change log items. Each change log item indicates change information of one updated entity, which includes information such as a unique identifier (assigned by the database to every entity), a type of the operation on the entity, and optionally, data of the updated entity and so on. In addition, change log items in the change log normally grow backward in the order of the modified time of the updated entity.

In the related art, generally, when entities (no matter an identical entity or different entities) are operated (modified) at a time, one change log item will be added into the change log. By this mode, with the increase of the number of times of data updating, the change log will become increasingly larger and grow limitlessly.

In order to limit the unlimited increase of the change log, a normally used scheme is that: with regard to each entity, only at most one change log item of the entity exists in the change log, that is, when one entity is modified, and before a corresponding change log item is added into the change log, firstly it is to query whether the change log item of the entity has existed in the change log; if yes, it is to modify the change log item corresponding to the entity according to a certain kind of superposition policy; if not, it is to add one change log item corresponding to the entity into the change log.

With the above scheme, although a size of the change log can be limited, a mode of ergodic search needs to be used to search out whether the change log item corresponding to the entity exists in the change log. Furthermore, with regard to the modification at any one time, no matter whether the change log item corresponding to the entity exists in the change log or not, a flow of the above ergodic search is required to be executed once, which will affect the search speed and efficiency seriously.

### Summary of the Invention

The object of the present invention is to provide a method for searching, updating and synchronizing a change log item in a change log and a data synchronizing device, to overcome the problem that the efficiency of searching change log items is low in the related art.

In order to solve the above problem, the present invention provides a method for searching a change log item, which comprises:
in a change log of a data synchronizing device, ordering the change log items according to numerical values of entity identifiers contained in the items;
in the data synchronizing device, when data updating occurs in an entity in a database of the data synchronizing device, using a search algorithm of elements in an ordered sequence to search out whether a change log item containing an entity identifier of the entity exists in the change log.

Wherein, the search algorithm of elements in the ordered sequence comprises: a binary search algorithm.

The present invention further provides a method for updating a change log item, which comprises:
in a change log of a data synchronizing device, ordering change log items according to numerical values of entity identifiers contained in the items;
in the data synchronizing device, when data updating occurs in an entity in a database of the data synchronizing device, using a search algorithm of elements in an ordered sequence to search out whether a change log item containing an entity identifier of the entity exists in the change log; if yes, according to a superposition policy, modifying original updating information in the change log item to be current updating information; if no, adding a change log item corresponding to the current updating into the change log, and still ordering the change log items in the change log for which the addition is completed according to the numerical values of the entity identifiers contained in the items.

Wherein, the step of adding a change log item corresponding to the current updating into the change log comprises: after adding the change log item corresponding to the current updating to any position in the change log, ordering the change log items in the change log according to the numerical values of the entity identifiers.

Wherein, the step of adding a change log item corresponding to the current updating into the change log comprises: according to an interpolation algorithm for the elements in the ordered sequence, processing the entity identifier in the change log item, and adding the change log item corresponding to the current updating to a relevant position in the change log.

Wherein, the interpolation algorithm for the elements in the ordered sequence comprises: binary interpolation algorithm.

Wherein, the search algorithm of elements in the ordered sequence comprises: a binary search algorithm.

The present invention further provides a method for synchronizing a change log item, which comprises:
when the synchronization is performed, a data synchronizing device synchronizing data corresponding to change log items saved in a local change log to an opposite end device; after the synchronization is completed, the data synchronizing device saving all change log items which are synchronized unsuccessfully, and ordering all the change log items which are synchronized unsuccessfully according to numerical values of entity identifiers contained in the items.

The above method further comprises:
each change log item in the change log corresponding to one FLAG, wherein, the value of the FLAG is used to indicate whether a corresponding change log item is valid;
in the process of the synchronization, the opposite end device receiving data sent from the data synchronizing device, performing synchronous processing of relevant data in local, and returning a synchronization success response or a synchronization failure response to the data synchronizing device according to synchronous processing results of the data; and after receiving the synchronization success response, the data synchronizing device setting the value of the FLAG of the change log item corresponding to the data as indicating that the item is invalid;
after the synchronization is completed, the step of the data synchronizing device saving all change log items which are synchronized unsuccessfully comprising: after the synchronization is completed, the data synchronizing device saving all valid change log items indicated by the value of the FLAG.

The present invention further provides a data synchronizing device, which comprises: a storage unit and a search unit;
the storage unit is configured to: save a change log, and order change log items according to numerical values of entity identifiers contained in the items in the change log;
the search unit is configured to: when data updating occurs in an entity in a database of the data synchronizing device, use a search algorithm of elements in an ordered sequence to search whether a change log item containing an entity identifier of the entity exists in the change log.

The above device further comprises an update unit;
the search unit is further configured to: send search success message or search failure message to the update unit correspondingly according to search results;
the update unit is configured to: after receiving the search success message, according to a superposition policy, modify original updating information in the change log item as current updating information; and after receiving the search failure message, add a change log item corresponding to the current updating into the change log; wherein, the change log items in the change log for which the addition is completed are still ordered according to the numerical values of the entity identifiers contained in the items.

Wherein, the update unit is configured to:
after adding the change log item corresponding to the current updating to any position in the change log, order the change log items in the change log according to the numerical values of the entity identifiers; or
according to an interpolation algorithm for the elements in the ordered sequence, process the entity identifier in the change log item, and add the change log item corresponding to the current updating to a relevant position in the change log.

The above device further comprises a synchronization unit;
the synchronization unit is configured to: when data synchronization is performed with an opposite end device, synchronize data corresponding to change log items saved in the change log to the opposite end device; and after the synchronization is completed, save all change log items which are synchronized unsuccessfully, and order all the change log items which are synchronized unsuccessfully according to the numerical values of the entity identifiers contained in the items.

Wherein, the search algorithm of elements in the ordered sequence comprises: a binary search algorithm.

The present invention further provides a data synchronizing device, which comprises a synchronization unit, wherein, the synchronization unit is configured to: when data synchronization is performed with an opposite end device, synchronize data corresponding to change log items saved in a change log to the opposite end device; and after the synchronization is completed, save all change log items which are synchronized unsuccessfully, and order all the change log items which are synchronized unsuccessfully according to numerical values of entity identifiers contained in the items.

With the present invention, not only a size of the change log can be limited to make the file maintenance simple, but also the search speed for change log items can be improved greatly since the speed for searching the ordered sequence is much faster than the speed of the ergodic search.

### Brief Description of Drawings

FIG. 1 is a flow diagram of a method for updating a change log item according to the example of the present invention.
FIG. 2 is a flow diagram of increment synchronization according to the example of the present invention.
FIG. 3 is a structural schematic diagram of change log items in a change log according to the example of the present invention.
FIG. 4 is a schematic diagram of an ordered change log according to the example of the present invention.
FIG. 5 is a schematic diagram of an updated change log according to the example of the present invention.
FIG. 6 is a schematic diagram of a change log after a change log item is interposed with an entity identifier being 6 according to the example of the present invention.
FIG. 7 (a) is a schematic diagram of adding a new change log item with an entity identifier being 6 to the end of the change log directly according to the example of the present invention.
FIG. 7 (b) is a schematic diagram of a reordered change log according to the example of the present invention.

### Preferred Embodiments of the Present Invention

The technical scheme of the present invention will be described in detail in combination with the accompany drawings and examples below.

The basic conception of the searching method of the present invention is: in a change log of a data synchronizing device (e.g. a terminal such as a cellphone or a Personal Digital Assistant (PDA), a server or any other device which can implement data synchronization), ordering change log items according to numerical values of entity identifiers contained in the items; in the data synchronizing device, when data updating occurs in an entity in a database of the data synchronizing device, using a search algorithm of elements in an ordered sequence to search out whether a change log item containing an entity identifier exists in the above change log.

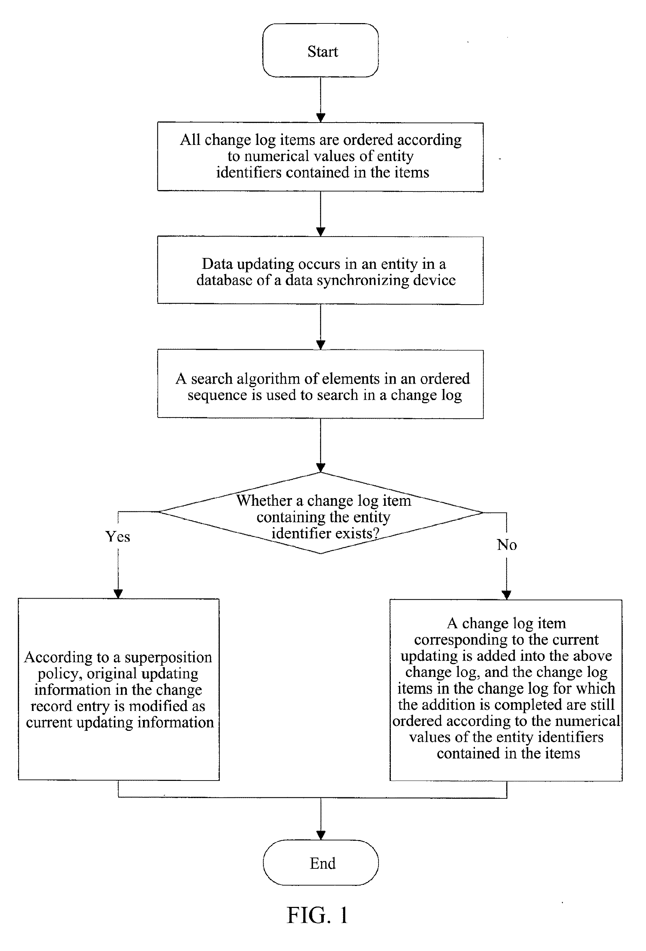

Correspondingly, as shown in FIG. 1, the basic conception of the updating method is: after the search is completed according to the above searching method, if the change log item containing the entity identifier is found in the change log, according to a superposition policy, modifying original updating information in the change log item to be current updating information; otherwise adding a change log item corresponding to the current updating into the above change log, and still ordering the change log items in the change log for which the addition is completed according to the numerical values of the entity identifiers contained in the items.

To implement the step of still ordering the change log items in the change log for which the addition is completed according to the numerical values of the entity identifiers contained in the items, any one of the following two modes can be used:
In mode 1, when the change log items are added into the change log, the change log item corresponding to the current updating can be added to any position in the above change log (preferably, it can be added to the end of the change log); after the addition is completed, the change log items are reordered according to the numerical values of the entity identifiers contained in the change log items in the change log.
In mode 2, when the change log items are added into the change log, the entity identifier in the change log item can be processed according to an interpolation algorithm for the elements in the ordered sequence, and the change log item corresponding to the current updating is added to a relevant position in the change log.

After the above updating method is used, a brand new ordered change log can be obtained, and the change log is operated circularly as such, which not only makes the file maintenance simpler, but also improves the search speed for change log items greatly. In a word, in the present invention, ordering and interpolating for the change log are integrated into the synchronization, thus implementing a fast search for the change log items in the change log.

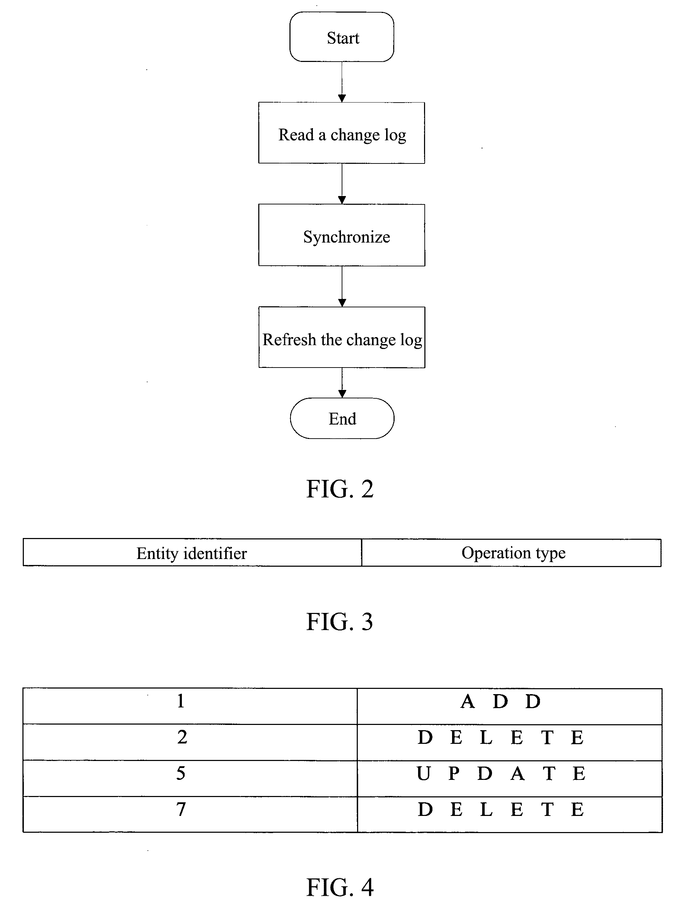

When the above data synchronizing device needs to perform data synchronization with other devices, and as shown in FIG. 2, the following steps are executed:
1) reading a change log: all change log record items in the change log are read.
2) synchronizing: the data synchronization between the data synchronizing device and the other devices is implemented.
3) refreshing the change log: the change log items corresponding to the entities which are synchronized successfully are deleted from the change log, and in a situation that the number of the remaining change log items is more than one, the remaining change log items are ordered according to numerical values of entity identifiers contained in the items.

After the synchronization is finished, if an update operation is performed on a certain entity or certain entities in the database, the above refreshed change log is updated in accordance with the update operation according to the above updating method.

One application example of the present invention is used to perform a further description below.

SyncML protocol synchronizing phonebook database is taken as an example. FIG. 3 is a structure of the change log item in the change log, wherein an entity identifier and an operation type with a FLAG are included.

The entity identifier: LUID, which is a unique ID number assigned by the phonebook database to every entity in the phonebook.

The operation type with FLAG: its value can be from 0 to 3. Wherein, 0 represents invalidity, 1 to 3 all represent validity, 1 represents ADD, 2 represents DELETE and 3 represents UPDATE.

After the synchronization is finished, a ordering operation is executed on each change log item which is synchronized unsuccessfully in the change log, including:
(1) any ordering algorithm is used to save all the change log items which are synchronized unsuccessfully into a temporary file in an ascending order or descending order according to the numerical values of the entity identifiers therein. Therefore, the temporary file is ordered.
   when the data synchronization is performed, the synchronizing device will synchronize the data corresponding to all valid change log items in the change log locally saved to an opposite end device one by one, and will receive a response (i.e. a synchronization success response or a synchronization failure response) sent from the opposite end about whether each datum is synchronized successfully. Since the value of the FIAG is used to indicate a corresponding modification operation type in the example, therefore, when the above synchronizing device receives a certain response, and if it determines that a certain datum has been synchronized successfully according to the response, the above synchronizing device sets the value of the FIAG corresponding to the change log item corresponding to the locally saved datum as indicating that the item is invalid (i.e. 0 in the example), otherwise it does not modify the value of the FIAG value corresponding to the change log item.
   After the synchronization is finished, all the change log items which are synchronized unsuccessfully are precisely the valid change log items indicated by the value of the FLAG in the change log.
(2) the original change log is deleted.
(3) the temporary file is renamed as a name of the original change log, thus one ordered change log is obtained, as shown in FIG. 4.

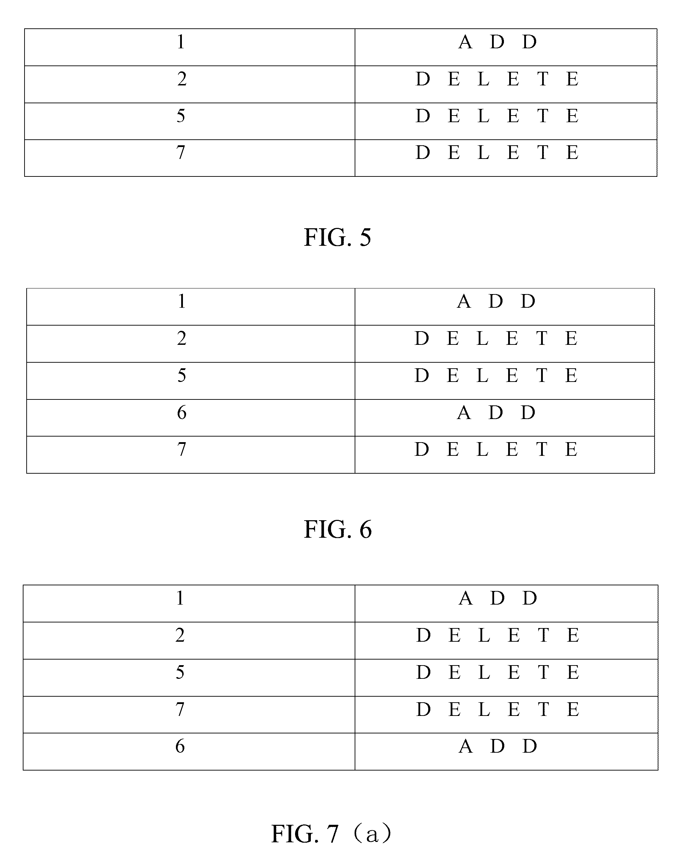

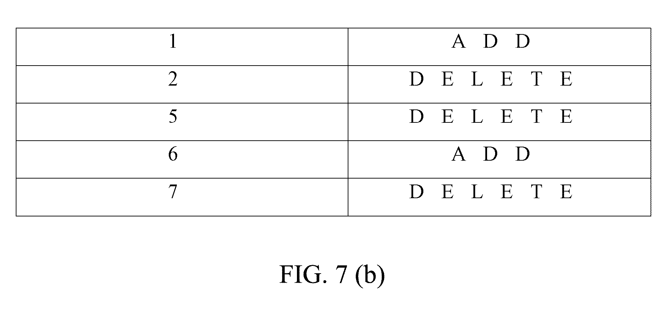

When a certain datum (and a certain entity) in the phonebook are updated, following steps are included:
(1) in the ordered change log, according to any valid search algorithm of elements in the ordered sequence, it is to search out whether the change log item corresponding to the entity identifier exists in the change log.
(2) according to the results of searching in the last step, following operations are performed:
   1) if the change log item corresponding to the entity identifier exists, the change log item is modified according to a certain superposition policy.
      If another operation is performed on an entity with an identifier being 5 in FIG. 4 and the operation is DELETE, according to the superposition policy, after a change log item with the identifier being 5 is found in the change log, the original operation type (UPDATE) is modified as DELETE.
   2) if the change log item corresponding to the entity identifier does not exist, according to the above design idea, any one of the following two schemes can be used:
      a) according to a certain interpolation algorithm, new change log items can be interposed into the change log orderly, to keep the change log in order all the time during the process of manually operating the phonebook.
         If an addition operation is performed on an entity with an entity identifier being 6, a change log item corresponding to this modification is required to be added into the change log. After the above interpolation algorithm is used, the change log item will be added between the change log items with entity identifiers being 5 and 7, as shown in FIG. 6.
      b) the new change log items can be added to the end of the change log directly, and then one reordering operation is performed on all change log items in the change log, and the purpose of ordering also can be achieved.
         If the addition operation is performed on an entity with an entity identifier being 6, a change log item corresponding to this modification is required to be added into the change log. As shown in FIG. 7 (a), the change log item is required to be added to the end of the change log (that is, it is added behind a change log item with an identifier being 7) firstly, and then all the change log items are reordered in an ascending order or descending order according to the numerical values of the entity identifiers in the items, and the ordered file is as shown in FIG. 7 (b).

With the above two schemes, a brand new ordered change log can be obtained.

It is assumed that, in a general scheme, the change log items in the change log are in a disordered arrangement: (the numbers represent the entity identifiers contained in the change log items in the change log)
1 4 3 9 7 12 17 15 20
thus if a change log item with an identifier being 15 is required to be updated and a traditional scheme is used, it needs to traverse 8 times, that is, the change log item can be found through 8 times. 9 times are required in the worst condition. An ergodic search is used, and the complexity is O (N), that is, it needs to search N times in the worst condition, wherein, N is the number of the change log items contained in the change log.

However, if an ordered arrangement is used for the change log items in the change log, the order is:
1 3 4 7 9 12 15 17 20

If a common searching method of element in the ordered sequence-a binary searching method-is used to find the change log item with the identifier being 15, only 2 times are required. The worst condition is to search for 20, and only 4 times are required. It is because that the complexity of the binary searching method is O (log₂ *N*).

When N is equal to 1000, with regard to the ergodic search, it needs to search 1000 times in the worst condition; but with regard to the binary search, it only needs to search 10 times at worst. Therefore, the search speed is improved greatly.

In the general scheme, the same as the above first sequence, it is assumed that a change log record with an identifier being 13 is required to be added into the change log, thus 13 will be arranged behind 20 in the general scheme, that is:
1 4 3 9 7 12 17 15 20 13

In the description, when the Contact Manager is modified, and assuming that change log records are newly added, in order to add the newly modified change log records into the change log, two methods can be used:
In method 1, a binary interpolation method can be used, that is, the binary searching method is used, a position in which the records should be interposed is found, and the new change log items are directly interposed into the change log orderly, to keep the change log in order all the time in the process of updating the database. Similarly, the complexity of the binary interpolation method is O (log₂ *N*). When N is 1000, even in the worst condition, it only needs 10 times of search to achieve an ordered change log.
In method 2, the new change log items can be added to the end of the change log directly, and then one reordering operation is performed on all change log items in the change log, and the purpose of ordering also can be achieved.

Although an interpolation is used in method 1, only the binary search is executed in fact, and even if N is equal to 1000, it only needs to search 10 times at worst. That is to say, with regard to N=1000, the times for interposing and searching in order are 20 in total at most, but with regard to the disordered ergodic, it needs to search 1000 times in the worst condition. Therefore, the complexity is reduced greatly with the present invention.

In conclusion, with the present invention, the search speed for the change log items is improved greatly. In the present invention, not only the unlimited increase of the file can be limited to make the file maintenance simpler, but also the search speed for the change log items can be improved greatly.

In addition, the present invention further provides a data synchronizing device, which comprises: a storage unit and a search unit;
the storage unit is used to: save a change log, and order change log items according to numerical values of entity identifiers contained in the items in the change log;
the search unit is used to: when data updating occurs in an entity in a database of the data synchronizing device, use a search algorithm of elements in an ordered sequence to search out whether a change log item containing an entity identifier of the entity exists in the change log.

The above device can further comprise an update unit;
the search unit is further used to: send a search success message or a search failure message to the update unit correspondingly according to the result of searching;
the update unit is used to: after receiving the search success message, according to a superposition policy, modify original updating information in the change log item as current updating information; and after receiving the search failure message, add a change log item corresponding to the current updating into the change log; wherein, the change log items in the change log for which the addition is completed are still ordered according to the numerical values of the entity identifiers contained in the items.

Furthermore, that the update unit is used to add a change log item corresponding to the current updating into the change log refers to that, the update unit is used to add the change log item corresponding to the current updating to any position in the change log, and then order the change log items in the change log according to the numerical values of the entity identifiers; or, the update unit is used to process the entity identifier in the change log item according to an interpolation algorithm of elements in an ordered sequence, and add the change log item corresponding to the current updating to a relevant position in the change log.

The above device can further comprise a synchronization unit; when data synchronization is performed with an opposite end device, the synchronization unit is used to synchronize data corresponding to change log items saved in the change log to the opposite end device; and after the synchronization is completed, the synchronization unit is also used to save all change log items which are synchronized unsuccessfully, and order all the change log items which are synchronized unsuccessfully according to the numerical values of the entity identifiers contained in the items.

The present invention further provides a data synchronizing device, which comprises a synchronization unit, wherein,
the synchronization unit is configured to: when data synchronization is performed with an opposite end device, synchronize data corresponding to change log items saved in a change log to the opposite end device; and after the synchronization is completed, save all change log items which are synchronized unsuccessfully, and order all the change log items which are synchronized unsuccessfully according to numerical values of entity identifiers contained in the items.

Certainly, the present invention can still have other various examples, any person skilled in the art can make various corresponding changes and transformations according to the present invention without departing from the spirit and essence of the present invention, and these corresponding changes and transformations shall all fall into the protection scope of the appended claims of the present invention.

### Industrial Applicability

With the present invention, not only a size of the change log can be limited to make the file maintenance simple, but also the search speed for change log items can be improved greatly since the speed for searching the ordered sequence is much faster than the speed of the ergodic search.

## Claims

1. A method for searching a change log item, comprising:
in a change log of a data synchronizing device, ordering change log items according to numerical values of entity identifiers contained in the items;
in the data synchronizing device, when data updating occurs in an entity in a database of the data synchronizing device, using a search algorithm of elements in an ordered sequence to search out whether a change log item containing an entity identifier of the entity exists in the change log.

2. The method for searching according to claim 1, wherein,
the search algorithm of elements in the ordered sequence comprises: a binary search algorithm.

3. A method for updating a change log item, comprising:
in a change log of a data synchronizing device, ordering change log items according to numerical values of entity identifiers contained in the items;
in the data synchronizing device, when data updating occurs in an entity in a database of the data synchronizing device, using a search algorithm of elements in an ordered sequence to search out whether a change log item containing an entity identifier of the entity exists in the change log; if yes, according to a superposition policy, modifying original updating information in the change log item as current updating information; if not, adding a change log item corresponding to the current updating into the change log, and still ordering the change log items in the change log for which the addition is completed according to the numerical values of the entity identifiers contained in the items.

4. The method for updating according to claim 3, wherein,
the step of adding a change log item corresponding to the current updating into the change log comprises: after adding an change log item corresponding to the current updating to any position in the change log, ordering the change log items in the change log according to the numerical values of the entity identifiers.

5. The method for updating according to claim 3, wherein,
the step of adding a change log item corresponding to the current updating into the change log comprises: according to an interpolation algorithm of elements in an ordered sequence, processing an entity identifier in the change log item, and adding a change log item corresponding to the current updating to a relevant position in the change log.

6. The method for updating according to claim 5, wherein,
the interpolation algorithm of elements in the ordered sequence comprises: a binary interpolation algorithm.

7. The method for updating according to claim 3, 4, 5 or 6, wherein,
the search algorithm of elements in the ordered sequence comprises: a binary search algorithm.

8. A method for synchronizing a change log item, comprising:
when synchronization is performed, a data synchronizing device synchronizing data corresponding to change log items saved in a local change log to an opposite end device; after the synchronization is completed, the data synchronizing device saving all change log items which are synchronized unsuccessfully, and ordering all the change log items which are synchronized unsuccessfully according to numerical values of entity identifiers contained in the items.

9. The method for synchronizing according to claim 8, further comprising:
each change log item in the change log corresponding to one FLAG, wherein, a value of the FLAG is used to indicate whether a corresponding change log item is valid;
in a process of the synchronization, the opposite end device receiving data sent from the data synchronizing device, performing synchronous processing on relevant data in local, and returning a synchronization success response or a synchronization failure response to the data synchronizing device according to a synchronous processing result of the data; and after receiving the synchronization success response, the data synchronizing device setting a value of a FLAG of the change log item corresponding to the data as indicating that the item is invalid;
after the synchronization is completed, the step of the data synchronizing device saving all change log items which are synchronized unsuccessfully comprising: after the synchronization is completed, the data synchronizing device saving all valid change log items indicated by the value of the FLAG.

10. A data synchronizing device, comprising: a storage unit and a search unit;
the storage unit is configured to: save a change log, and order change log items according to numerical values of entity identifiers contained in the items in the change log;
the search unit is configured to: when data updating occurs in an entity in a database of the data synchronizing device, use a search algorithm of elements in an ordered sequence to search out whether a change log item containing an entity identifier of the entity exists in the change log.

11. The device according to claim 10, further comprising an update unit;
the search unit is further configured to: send search success message or search failure message to the update unit correspondingly according to a result of searching;
the update unit is configured to: after receiving the search success message, according to a superposition policy, modify original updating information in the change log item as current updating information; and after receiving the search failure message, add a change log item corresponding to the current updating into the change log; wherein, the change log items in the change log for which the addition is completed are still ordered according to the numerical values of the entity identifiers contained in the items.

12. The device according to claim 11, wherein,
the update unit is configured to:
add a change log item corresponding to the current updating to any position in the change log, then order the change log items in the change log according to the numerical values of the entity identifiers; or
according to an interpolation algorithm of elements in an ordered sequence, process the entity identifier in the change log item, and add a change log item corresponding to the current updating to a relevant position in the change log.

13. The device according to claim 11, further comprising a synchronization unit;
the synchronization unit is configured to: when data synchronization is performed with an opposite end device, synchronize data corresponding to change log items saved in the change log to the opposite end device; and after the synchronization is completed, save all change log items which are synchronized unsuccessfully, and order all the change log items which are synchronized unsuccessfully according to the numerical values of the entity identifiers contained in the items.

14. The device according to claim 10, 11, 12 or 13, wherein,
the search algorithm of elements in the ordered sequence comprises: a binary search algorithm.

15. A data synchronizing device, comprising a synchronization unit, wherein:
the synchronization unit is configured to: when data synchronization is performed with an opposite end device, synchronize data corresponding to change log items saved in a change log to the opposite end device; and after the synchronization is completed, save all change log items which are synchronized unsuccessfully, and order all the change log items which are synchronized unsuccessfully according to numerical values of entity identifiers contained in the items.
